# FASCICULE DE BREVET EUROPEEN

(11) **EP 4 347 325 B1**
(45) Date de publication et mention de la délivrance du brevet: **28.05.2025**
(21) Numéro de dépôt: 22735529.4
(22) Date de dépôt: 26.04.2022
(51) Int. Cl.: B60R 25/24, G07C 9/00, G06F 21/31, H04L 9/08

(54) **PROCÉDÉ ET SYSTÈME POUR AUTHENTIFIER UN DISPOSITIF DE COMMANDE À DISTANCE PORTABLE UTILISABLE POUR DÉMARRER UN VÉHICULE AUTOMOBILE**
VERFAHREN UND SYSTEM ZUR AUTHENTIFIZIERUNG EINER TRAGBAREN FERNSTEUERUNGSVORRICHTUNG ZUM STARTEN EINES KRAFTFAHRZEUGS
METHOD AND SYSTEM FOR AUTHENTICATING A PORTABLE REMOTE-CONTROL DEVICE THAT IS ABLE TO BE USED FOR STARTING A MOTOR VEHICLE

(30) Priorité: 02.06.2021 FR 2105804
(43) Date de publication de la demande: 10.04.2024
(73) Titulaire: Stellantis Auto SAS, 78300 Poissy (FR)
(72) Inventeur: SAFIDINE, Issam, 91260 Juvisy sur Orge (FR); MARCHAND, Christophe, 91370 Verrières le Buisson (FR); COPIER, Nathalie, 25420 Courcelles les Montbeliard (FR); LE FRALLIEC, Erwann, 93140 Bondy (FR); ROY, Cyrille, 68200 Mulhouse (FR)
(74) Mandataire: ESIP
(86) Numéro de dépôt international: PCT/FR2022/050784
(87) Numéro de publication internationale: WO 2022/254109

(56) Documents cités:
- EP-A1- 0 816 192
- EP-A1- 3 050 762
- FR-A1- 3 018 056
- US-A1- 2019 291 694
- US-A1- 2019 291 695

## Description

La présente invention revendique la priorité de la demande française 2105804 déposée le 02.06.2021.

### Domaine technique de l'invention

La présente invention concerne le domaine des systèmes de gestion d'accès et de démarrage de véhicules automobiles. L'invention porte en particulier sur un procédé d'authentification d'un dispositif de commande à distance portable utilisable pour démarrer un véhicule automobile. L'invention porte en outre sur un système informatique mettant en œuvre un tel procédé. L'invention s'applique notamment aux voitures de tourisme, aux véhicules utilitaires, aux poids-lourds, etc.

### État de la technique antérieure

On sait que l'accès et le démarrage des véhicules automobiles actuels s'effectue généralement au moyen de dispositifs de commande à distance portables (i.e. télécommandes, smartphones, etc.), qui, de nos jours, comprennent généralement un transmetteur de signaux radiofréquences et, la plupart du temps, une clef escamotable permettant d'opérer les serrures du véhicule et de le démarrer lors de défaillances éventuelles du transmetteur de signaux radiofréquences. On sait aussi qu'il peut arriver que l'utilisateur d'un véhicule automobile égare un dispositif de commande à distance portable permettant le démarrage d'un véhicule automobile. Pour parer à ce problème, les constructeurs automobiles ont prévu des procédures pour permettre d'authentifier un nouveau dispositif de commande à distance portable en service après-vente afin de pouvoir l'utiliser ensuite pour déverrouiller et démarrer le véhicule. Plus spécifiquement, de tels processus fournissent des moyens pour permettre à un système de gestion d'accès et de démarrage d'un véhicule automobile d'authentifier l'identifiant d'un nouveau dispositif de commande à distance portable afin que celui-ci puisse ensuite être utilisé pour déverrouiller et démarrer le véhicule. Cependant, des personnes malintentionnées ont détourné l'utilisation de ces procédés pour commettre des vols de véhicules. Et, pour éviter cela, les constructeurs automobiles n'ont eu d'autre choix que de perfectionner ces procédés. Par exemple, le brevet FR 3 018 056 propose un procédé d'authentification d'un dispositif de commande à distance portable dans lequel une étape d'enregistrement allongée est réalisée lorsque l'identifiant d'un dispositif de commande inconnu est présenté pour la première fois au système de gestion d'accès et de démarrage d'un véhicule automobile. Cela implique qu'un opérateur doit donc demeurer aux abords du véhicule pendant une durée relativement longue afin de pouvoir authentifier un nouveau dispositif de commande à distance portable. Mais, dans bien des cas, il s'avère que cette étape d'enregistrement allongée n'est pas suffisante pour prévenir le vol de véhicules, car des voleurs peuvent tout à fait demeurer discrètement pendant une durée relativement longue aux abords d'un véhicule sans forcément attirer l'attention des riverains ou des forces de l'ordre, en particulier la nuit.

### Résumé de l'invention

L'invention vise à pallier cet inconvénient. L'invention a en particulier pour but de fournir un procédé et un système qui permettent d'authentifier un dispositif de commande à distance portable utilisable pour déverrouiller et démarrer un véhicule automobile, et ce tout en minimisant le risque que de tels moyens puissent être utilisés par des personnes mal intentionnées aux fins délictuelles de vol de véhicules.

Ce but est atteint, selon un premier objet de l'invention, au moyen d'un procédé d'authentification, par un système informatique embarqué à bord d'un véhicule automobile, d'un dispositif de commande à distance portable utilisable pour démarrer le véhicule, le procédé comprenant les étapes de :
- déterminer si un ensemble d'étapes a été réalisé trois fois durant un intervalle de temps d'une première durée préétablie, tandis que, à chaque fois, l'ensemble d'étapes était réalisé au cours d'un intervalle de temps d'une deuxième durée préétablie et que la deuxième réalisation de l'ensemble d'étape a été séparée de la première réalisation de l'ensemble d'étapes et de la troisième réalisation de l'ensemble d'étapes par un intervalle de temps d'une troisième durée préétablie ; et, lorsqu'il est établi que tel est le cas,
- acquérir des données caractérisant un identifiant du dispositif de commande à distance portable ; et
- enregistrer les données caractérisant un identifiant du dispositif de commande à distance portable sur un support de stockage de données.

Selon une variante, l'ensemble d'étapes peut comprendre une première étape consistant à opérer, alors que tous les ouvrants du véhicule sont clos, une interface de commande de verrouillage agencée à l'intérieur de l'habitacle du véhicule et, simultanément, un moyen de verrouillage d'un ouvrant du véhicule accessible uniquement depuis l'extérieur du véhicule.

Selon une autre variante, l'ensemble d'étapes peut comprendre une deuxième étape consistant à opérer une serrure d'un ouvrant du véhicule au moyen du dispositif de commande à distance portable.

Selon une autre variante, l'ensemble d'étape peut comprendre une troisième étape consistant à ouvrir tous les ouvrants du véhicule.

Selon une autre variante, la première durée préétablie peut être comprise entre 20mn et 40mn.

Selon une autre variante, la deuxième durée préétablie peut être comprise entre 4mn et 7mn.

Selon une autre variante, la troisième durée préétablie peut être comprise entre 4mn et 7mn.

L'invention a en outre pour objet un système pour authentifier un dispositif de commande à distance portable utilisable pour démarrer un véhicule automobile, le système comprenant au moins une unité de traitement d'informations, comprenant au moins un processeur, et un support de stockage de données configurés pour mettre en œuvre un procédé tel que décrit ci-dessus.

L'invention a en outre pour objet un programme d'ordinateur comprenant des instructions de code de programme pour l'exécution des étapes d'un procédé tel que décrit ci-dessus lorsque ledit programme est exécuté sur un ordinateur.

L'invention a enfin pour objet un véhicule automobile comprenant un système tel que décrit ci-dessus.

### Brève description des figures

D'autres caractéristiques et avantages de l'invention apparaîtront à l'examen de la description détaillée ci-après, et des dessins annexés, sur lesquels :
[Fig. 1] est un schéma fonctionnel d'un système selon l'invention et
[Fig. 2] est un organigramme illustrant les étapes d'un procédé selon l'invention.

### Description détaillée de l'invention

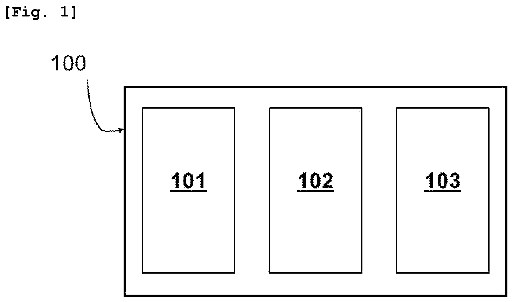

Selon l'invention, un système 100 pour authentifier un dispositif de commande à distance portable utilisable pour démarrer un véhicule automobile est un système informatique, représenté à la figure 1, qui comprend une unité de traitement d'informations 101, comprenant un ou plusieurs processeurs, un support de stockage de données 102 et une interface d'entrée et sortie 103 permettant la réception et l'émission de données. Selon certains modes de réalisation, le système 100 selon l'invention est embarqué dans un véhicule automobile (e.g. voiture, autobus, poids lourd, etc.) et il est hébergé sur un ou plusieurs des calculateurs, unités de commande électroniques ou autres boitiers télématiques du véhicule. Selon d'autres modes de réalisation, le système 100 selon l'invention est hébergé sur un calculateur d'un véhicule automobile et il interagit par le biais de son interface d'entrée et sortie 103 avec un calculateur d'un appareillage de gestion d'accès et de démarrage d'un véhicule automobile. Selon le mode de réalisation préféré, le système 100 selon l'invention fait partie intégrante d'un calculateur d'un appareillage de gestion d'accès et de démarrage d'un véhicule automobile.

Par conséquent, quel que soit le mode de réalisation de l'invention, le système 100 selon l'invention est en mesure d'interagir, par le biais de son interface d'entrée et sortie 103, avec les composants qui, de manière conventionnelle, forment un appareillage de gestion d'accès et de démarrage d'un véhicule automobile. Selon l'invention, ces composants incluent, au moins, un module de communication par signaux radiofréquences pour communiquer avec un dispositif de commande à distance portable, une interface de commande de verrouillage (e.g. bouton poussoir, clavier tactile) et des moyens pour interagir avec les serrures et ou tout autre moyen de verrouillage d'un ouvrant d'un véhicule (e.g. poignée, serrure, bouton poussoir agencé sur ouvrant de coffre, etc.). Ainsi, en interagissant avec ou en faisant partie intégrante d'un tel appareillage, le système 100 selon l'invention est avantageusement en mesure d'acquérir des données caractérisant un identifiant d'un dispositif de commande à distance portable et d'enregistrer les données caractérisant un identifiant du dispositif de commande à distance portable sur un support de stockage de données. En outre, par ces moyens, le système 100 selon l'invention est aussi en mesure de déterminer si une étape consistant à opérer, alors que tous les ouvrants du véhicule sont clos, une interface de commande de verrouillage agencée à l'intérieur de l'habitacle d'un véhicule et, simultanément, un moyen de verrouillage d'un ouvrant du véhicule accessible uniquement depuis l'extérieur du véhicule a été réalisée. Il peut aussi déterminer si une étape consistant à opérer une serrure d'un ouvrant d'un véhicule au moyen d'un dispositif de commande à distance portable et/ou si une étape consistant à ouvrir tous les ouvrants d'un véhicule a été réalisée.

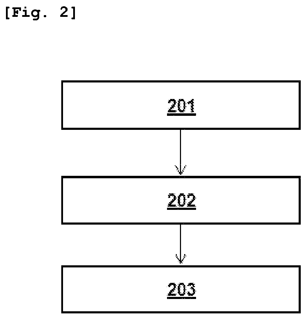

Selon l'invention, tous les éléments décrits ci-dessus contribuent donc pour permettre au système 100 selon l'invention de mettre en œuvre un procédé d'authentification d'un dispositif de commande à distance portable utilisable pour démarrer un véhicule automobile, tel que décrit ci-dessous en lien avec la figure 2.

Selon une première étape 201 du procédé selon l'invention, qui intervient lorsque l'appareillage de gestion d'accès et de démarrage du véhicule est présenté avec un nouvel identifiant d'un dispositif de commande à distance portable, le système 100 selon l'invention détermine si un ensemble d'étapes a été réalisé trois fois durant un intervalle de temps d'une première durée préétablie, tandis que, à chaque fois, l'ensemble d'étapes était réalisé au cours d'un intervalle de temps d'une deuxième durée préétablie et que la deuxième réalisation de l'ensemble d'étape a été séparée de la première réalisation de l'ensemble d'étapes et de la troisième réalisation de l'ensemble d'étapes par un intervalle de temps d'une troisième durée préétablie. De préférence, la première durée préétablie est comprise entre 20mn et 40mn (e.g. 30mn), la deuxième durée préétablie est comprise entre 4mn et 7mn (e.g. 5mn) et la troisième durée préétablie est comprise entre 4mn et 7mn (e.g. 5mn). En d'autres termes, au cours de cette première étape 201 du procédé selon l'invention, le système 100 selon l'invention, lorsque l'appareillage de gestion d'accès et de démarrage est mis en présence pour la première fois d'un nouvel identifiant d'un dispositif de commande à distance portable, vérifie si un cycle de trois réalisations d'un ensemble d'étapes a eu lieu au cours d'une fenêtre temporelle de durée fixe, tandis que chacune des réalisations était réalisée pendant un temps imparti et séparée de la suivante par un intervalle de temps de durée fixe.

Plus spécifiquement, l'ensembles d'étapes qui doit être réalisé comprend avantageusement une première étape consistant à opérer, alors que tous les ouvrants du véhicule sont clos, une interface de commande de verrouillage agencée à l'intérieur de l'habitacle du véhicule et, simultanément, un moyen de verrouillage d'un ouvrant du véhicule accessible uniquement depuis l'extérieur du véhicule. La réalisation de cette étape implique donc la présence d'au moins deux opérateurs, un à l'intérieur du véhicule et l'autre à l'extérieur. De plus, selon l'invention, l'ensemble d'étapes comprend une deuxième étape consistant à opérer une serrure d'un ouvrant du véhicule au moyen du dispositif de commande à distance portable. Cette étape implique que l'authentification du nouveau dispositif de commande à distance portable ne peut avoir lieu que lorsque celui-ci est en mesure d'opérer une serrure du véhicule. Enfin, selon l'invention, l'ensemble d'étapes comprend une troisième étape consistant à ouvrir tous les ouvrants du véhicule.

Ainsi, au cours de cette première étape 201 du procédé selon l'invention, le système selon l'invention détermine si trois réalisations de chacune des étapes décrites ci-dessus réalisées successivement ont eu lieu, et ce en fonction des délais impartis évoqués ci-dessus. En réalité, cette première étape 201 du procédé selon l'invention permet au système 100 selon l'invention de déterminer si deux opérateurs sont présents et alertes pendant une durée relativement longue, si le dispositif de commande mobile est en mesure d'opérer les serrures du véhicule et si le contexte dans lequel se trouve le véhicule permet une ouverture de tous ses ouvrants. Cette première étape 201 du procédé implique donc une authentification relativement longue et contraignante en matière de mouvements des opérateurs autour et dans le véhicule, ce qui diminue d'autant la possibilité de détournement de ce procédé pour commettre des vols de véhicule.

Ensuite, lorsqu'il établit que l'ensemble d'étapes a été réalisé trois fois durant un intervalle de temps d'une première durée préétablie, tandis que, à chaque fois, l'ensemble d'étapes était réalisé au cours d'un intervalle de temps d'une deuxième durée préétablie et que la deuxième réalisation de l'ensemble d'étape a été séparée de la première réalisation de l'ensemble d'étapes et de la troisième réalisation de l'ensemble d'étapes par un intervalle de temps d'une troisième durée préétablie, le système 100 selon l'invention réalise les étapes suivantes du procédé selon l'invention décrites ci-dessous.

Selon une deuxième étape 202 du procédé selon l'invention, le système 100 selon l'invention acquiert des données caractérisant un identifiant du dispositif de commande à distance portable et, selon une troisième étape 203, le système 100 selon l'invention enregistre les données caractérisant un identifiant du dispositif de commande à distance portable sur son support de stockage de données 103 et/ou celui de l'appareillage de gestion d'accès et de démarrage prévu pour stocker des données caractérisant des identifiants de dispositifs de commande à distance portables du véhicule qui sont authentifiés. A ce stade, le dispositif de commande à distance portable peut donc être utilisé pour déverrouiller et démarrer le véhicule.

Par conséquent, aux termes du procédé et du système selon l'invention décrits ci-dessus, une solution est fournie pour permettre d'authentifier un dispositif de commande à distance portable utilisable pour déverrouiller et démarrer un véhicule automobile, et ce tout en minimisant le risque que de tels moyens puissent être utilisés par des personnes mal intentionnées aux fins délictuelles de vol de véhicules.

## Revendications

1. Procédé d'authentification, par un système informatique (100) embarqué à bord d'un véhicule automobile, d'un dispositif de commande à distance portable utilisable pour démarrer le véhicule, **caractérisé en ce que** le procédé comprend les étapes de :
• déterminer si un ensemble d'étapes a été réalisé trois fois durant un intervalle de temps d'une première durée préétablie, tandis que, à chaque fois, l'ensemble d'étapes était réalisé au cours d'un intervalle de temps d'une deuxième durée préétablie et que la deuxième réalisation de l'ensemble d'étape a été séparée de la première réalisation de l'ensemble d'étapes et de la troisième réalisation de l'ensemble d'étapes par un intervalle de temps d'une troisième durée préétablie ; et, lorsqu'il est établi que tel est le cas,
• acquérir des données caractérisant un identifiant du dispositif de commande à distance portable ; et
• enregistrer les données caractérisant un identifiant du dispositif de commande à distance portable sur un support de stockage de données.

2. Procédé selon la revendication 1, **caractérisé en ce que** l'ensemble d'étapes comprend une première étape consistant à opérer, alors que tous les ouvrants du véhicule sont clos, une interface de commande de verrouillage agencée à l'intérieur de l'habitacle du véhicule et, simultanément, un moyen de verrouillage d'un ouvrant du véhicule accessible uniquement depuis l'extérieur du véhicule.

3. Procédé selon l'une des revendications précédentes, **caractérisé en ce que** l'ensemble d'étapes comprend une deuxième étape consistant à opérer une serrure d'un ouvrant du véhicule au moyen du dispositif de commande à distance portable.

4. Procédé selon l'une des revendications précédentes, **caractérisé en ce que** l'ensemble d'étape comprend une troisième étape consistant à ouvrir tous les ouvrants du véhicule.

5. Procédé selon l'une des revendications précédentes, **caractérisé en ce que** la première durée préétablie est comprise entre 20mn et 40mn.

6. Procédé selon l'une des revendications précédentes, **caractérisé en ce que** la deuxième durée préétablie est comprise entre 4mn et 7mn.

7. Procédé selon l'une des revendications précédentes, **caractérisé en ce que** la troisième durée préétablie est comprise entre 4mn et 7mn.

8. Système (100) pour authentifier un dispositif de commande à distance portable utilisable pour démarrer un véhicule automobile, **caractérisé en ce que** le système comprend au moins une unité de traitement d'informations (101), comprenant au moins un processeur, et un support de stockage de données (102) configurés pour mettre en œuvre un procédé selon l'une quelconque des revendications précédentes.

9. Programme d'ordinateur comprenant des instructions de code de programme pour l'exécution des étapes d'un procédé selon l'une quelconque des revendications 1 à 7 lorsque ledit programme est exécuté sur un ordinateur.

10. Véhicule automobile, **caractérisé en ce qu'**il comprend un système selon la revendication 8.

## Patentansprüche

1. Verfahren zur Authentifizierung einer tragbaren Fernsteuerungsvorrichtung, die zum Starten des Fahrzeugs verwendet werden kann, durch ein in einem Kraftfahrzeug eingebautes Computersystem (100), **dadurch gekennzeichnet, dass** das Verfahren die folgenden Schritte umfasst:
• festzustellen, ob eine Reihe von Schritten dreimal innerhalb eines Zeitintervalls einer ersten vorab festgelegten Dauer durchgeführt wurde, während jedes Mal die Reihe von Schritten innerhalb eines Zeitintervalls einer zweiten vorab festgelegten Dauer durchgeführt wurde, und ob die zweite Durchführung der Reihe von Schritten von der ersten Durchführung der Reihe von Schritten und der dritten Durchführung der Reihe von Schritten durch ein Zeitintervall einer dritten vorab festgelegten Dauer getrennt wurde, und, wenn dies der Fall ist,
• Erfassung von Daten, die eine Kennung des tragbaren Fernbedienungsgeräts kennzeichnen; und
• die Daten, die eine Kennung der tragbaren Fernbedienungseinrichtung kennzeichnen, auf einem Datenspeichermedium speichern.

2. Verfahren nach Anspruch 1, **dadurch gekennzeichnet, dass** der Satz von Schritten einen ersten Schritt umfasst, der darin besteht, während alle Fahrzeugtüren geschlossen sind, eine Verriegelungssteuerschnittstelle zu betätigen, die innerhalb des Fahrzeuginnenraums angeordnet ist, und gleichzeitig eine Verriegelungseinrichtung für einen Fahrzeugtüren, der nur von außerhalb des Fahrzeugs zugänglich ist.

3. Verfahren nach einem der vorhergehenden Ansprüche, **dadurch gekennzeichnet, dass** der Satz von Schritten einen zweiten Schritt umfasst, der darin besteht, ein Schloss eines zu öffnenden Fahrzeuges mittels der tragbaren Fernsteuervorrichtung zu betätigen.

4. Verfahren nach einem der vorhergehenden Ansprüche, **dadurch gekennzeichnet, dass** die Schrittanordnung einen dritten Schritt umfasst, der darin besteht, alle Öffnungen des Fahrzeugs zu öffnen.

5. Verfahren nach einem der vorhergehenden Ansprüche, **dadurch gekennzeichnet, dass** die erste vorgegebene Zeitdauer zwischen 20min und 40min liegt.

6. Verfahren nach einem der vorhergehenden Ansprüche, **dadurch gekennzeichnet, dass** die zweite vorgegebene Dauer zwischen 4mn und 7mn liegt.

7. Verfahren nach einem der vorhergehenden Ansprüche, **dadurch gekennzeichnet, dass** die dritte vorgegebene Dauer zwischen 4mn und 7mn liegt.

8. System (100) zum Authentifizieren einer tragbaren Fernsteuervorrichtung, die zum Starten eines Kraftfahrzeugs verwendbar ist, **dadurch gekennzeichnet, dass** das System mindestens eine Informationsverarbeitungseinheit (101), die mindestens einen Prozessor umfasst, und ein Datenspeichermedium (102) umfasst, das konfiguriert ist, um ein Verfahren nach einem der vorhergehenden Ansprüche auszuführen.

9. Computerprogramm mit Programmcodeanweisungen zum Ausführen der Schritte eines Verfahrens nach einem der Ansprüche 1 bis 7, wenn das Programm auf einem Computer ausgeführt wird.

10. Kraftfahrzeug, **dadurch gekennzeichnet, dass** es ein System nach Anspruch 8 umfasst.

## Claims

1. A method of authenticating, by a computer system (100) on board a motor vehicle, a portable remote control device usable for starting the vehicle, **characterized in that** the method comprises the steps of:
• determining whether a set of steps has been performed three times during a time interval of a first pre-established duration, while each time the set of steps was performed during a time interval of a second pre-established duration and the second performance of the set of steps was separated from the first performance of the set of steps and the third performance of the set of steps by a time interval of a third pre-established duration; and, where it is established that this is the case,
• acquiring data characterizing an identifier of the portable remote control device; and
• recording the data characterizing an identifier of the portable remote control device on a data storage medium.

2. Method according to Claim 1, **characterized in that** the set of steps comprises a first step consisting in operating, while all the opening doors of the vehicle are closed, a locking control interface arranged inside the passenger compartment of the vehicle and, simultaneously, a means of locking a door of the vehicle accessible only from the outside of the vehicle.

3. Method according to one of the preceding claims, **characterized in that** the set of steps comprises a second step consisting in operating a lock of a door of the vehicle by means of the portable remote control device.

4. Method according to one of the preceding claims, **characterized in that** the step assembly comprises a third step consisting in opening all the opening doors of the vehicle.

5. Process according to one of the preceding claims, **characterized in that** the first predetermined duration is between 20 min and 40 min.

6. Process according to one of the preceding claims, **characterized in that** the second predetermined duration is between 4 min and 7 min.

7. Process according to one of the preceding claims, **characterized in that** the third predetermined duration is between 4 min and 7 min.

8. System (100) for authenticating a portable remote control device usable for starting a motor vehicle, **characterized in that** the system comprises at least one information processing unit (101), comprising at least one processor, and a data storage medium (102) configured to implement a method according to any one of the preceding claims.

9. A computer program comprising program code instructions for executing the steps of a method according to any one of claims 1 to 7 when said program is executed on a computer.

10. Motor vehicle, **characterized in that** it comprises a system according to claim 8.
